# EUROPEAN PATENT APPLICATION

(11) **EP 4 792 962 A1**
(43) Date of publication of application: **19.08.2026**
(21) Application number: 23955420.7
(22) Date of filing: 11.10.2023
(51) Int. Cl.: B23C 9/00, B23Q 17/09

(54) **CUTTING SYSTEM AND TURNING TOOL**

(71) Applicant: Sumitomo Electric Industries, Ltd., Osaka-shi, Osaka 541-0041 (JP)
(72) Inventor: TANAKA, Yoshizo, Osaka-shi, Osaka 541-0041 (JP); KURIYAMA, Hiromitsu, Osaka-shi, Osaka 541-0041 (JP); ARAKI, Tadashi, Osaka-shi, Osaka 541-0041 (JP); OHMORI, Hiroki, Osaka-shi, Osaka 541-0041 (JP); YAMAGISHI, Suguru, Osaka-shi, Osaka 541-0041 (JP); KUWAYAMA, Ichiro, Osaka-shi, Osaka 541-0041 (JP); TAKANO, Toyohisa, Osaka-shi, Osaka 541-0041 (JP)
(74) Representative: Boult Wade Tennant LLP
(86) International application number: PCT/JP2023/036863
(87) International publication number: WO 2025/079169

(57) **Abstract**

A cutting machining system according to embodiments of the present disclosure includes: a power supply device that includes a power transmission antenna provided in a machining space of a machine tool; and a rotating tool disposed in the machining space. The rotating tool includes a rotary shaft configured to be rotationally driven by the machine tool, a sensor provided to the rotary shaft, a case provided to the rotary shaft and configured to house the sensor, and one or a plurality of power reception antenna circuits housed in the case and configured to receive electric power transmitted from the power transmission antenna.

## Description

### TECHNICAL FIELD

The present disclosure relates to a cutting machining system and a rotating tool.

### BACKGROUND ART

PATENT LITERATURE 1 discloses a cutting tool including a body portion, a sensor unit disposed on the body portion, a wireless communication unit that transmits information indicating the output of a sensor to the outside, and a battery that supplies electric power to each component. The battery is housed in a battery housing portion which is a space provided in the body portion.

This cutting tool is capable of monitoring the state of the cutting tool during machining via the sensor and transmitting the result to the outside.

### CITATION LIST

### [PATENT LITERATURE]

PATENT LITERATURE 1: International Publication No. WO2022/230149

### SUMMARY OF THE INVENTION

A cutting machining system according to embodiments of the present disclosure includes: a power supply device that includes a power transmission antenna provided in a machining space of a machine tool; and a rotating tool disposed in the machining space. The rotating tool includes a rotary shaft configured to be rotationally driven by the machine tool, a sensor provided to the rotary shaft, a case provided to the rotary shaft and configured to house the sensor, and one or a plurality of power reception antenna circuits housed in the case and configured to receive electric power transmitted from the power transmission antenna.

### BRIEF DESCRIPTION OF DRAWINGS

[FIG. 1] FIG. 1 shows an overall configuration of a cutting machining system according to embodiments.
[FIG. 2] FIG. 2 is an external view of a rotating tool according to a first embodiment.
[FIG. 3] FIG. 3 is a block diagram showing an example of the configuration of the rotating tool.
[FIG. 4] FIG. 4 is a cross-sectional view of the rotating tool.
[FIG. 5] FIG. 5 is a cross-sectional view taken along arrows V-V in FIG. 4.
[FIG. 6] FIG. 6 shows a circuit module which is developed flat.
[FIG. 7] FIG. 7 is a radial cross-sectional view of a rotating tool according to a modification of the first embodiment.
[FIG. 8] FIG. 8 is a cross-sectional view taken along an axial plane of a rotating tool according to another modification of the first embodiment.
[FIG. 9] FIG. 9 shows a circuit module included in a rotating tool according to a second embodiment.
[FIG. 10] FIG. 10 is a radial cross-sectional view of the rotating tool according to the second embodiment.

### DETAILED DESCRIPTION

### [Problems to be solved by the present disclosure]

In the above-described conventional cutting tool, when battery power has been consumed and depleted, the battery needs to be replaced with a new battery. In this case, it is necessary to remove the old battery from the battery housing portion and to install a new battery therein. However, it is difficult to replace the battery during machining.

Therefore, if the machining time becomes long and the battery power is depleted during machining, there is a risk that the state of the cutting tool cannot be monitored thereafter.

The above-described conventional cutting tool is a turning tool for performing turning machining. However, a rotating tool for performing rotating machining also has similar problems.

Furthermore, since the rotating tool rotates during machining, it is difficult to connect a charging cable or the like to the rotating tool during machining. Therefore, even if the battery incorporated in the tool is a secondary battery and is configured to be rechargeable externally, there is a possibility that battery power will be depleted during machining.

### [Effects of the present disclosure]

According to the present disclosure, it is possible to appropriately monitor the state of the rotating tool during machining.

First, contents of embodiments will be listed and described.

### [Outline of embodiments]

(1) A cutting machining system according to an embodiment of the present disclosure includes: a power supply device that includes a power transmission antenna provided in a machining space of a machine tool; and a rotating tool disposed in the machining space. The rotating tool includes a rotary shaft configured to be rotationally driven by the machine tool, a sensor provided to the rotary shaft, a case provided to the rotary shaft and configured to house the sensor, and one or a plurality of power reception antenna circuits housed in the case and configured to receive electric power transmitted from the power transmission antenna.
   According to the above configuration, since the power supply device includes the power transmission antenna within the machining space and the rotating tool includes the one or plurality of power reception antenna circuits, power can be wirelessly fed to the rotating tool within the machining space. Accordingly, power can be fed to the rotating tool during machining, and even when the machining time becomes long, electric power can be continuously provided to the sensor, thereby enabling the sensor to operate. As a result, the state of the rotating tool during machining can be appropriately monitored.
(2) In the cutting machining system of the above (1), in a case where the case includes a side wall portion having a cylindrical shape, the side wall portion being disposed concentrically with the rotary shaft and surrounding an outer peripheral side of the rotary shaft, and an end wall portion having an annular shape and closing an end portion opening of the side wall portion, the one or plurality of power reception antenna circuits may be provided on an inner surface of the end wall portion.
   In this case, when the power transmission antenna is located at a position axially spaced from the end portion of the rotary shaft, it is possible to suppress an increase in a change in the distance between the power transmission antenna and each power reception antenna circuit when the rotary shaft rotates, and to stably receive electric power transmitted from the power transmission antenna.
(3) In the cutting machining system of the above (2), the end wall portion may be formed of resin.
   In this case, it is possible to suppress interference with the reception of the transmitted electric power, which is caused by the end wall portion.
(4) In the cutting machining system of the above (2) or (3), the plurality of power reception antenna circuits may be provided at equal intervals along a circumferential direction centered on a central axis of the rotary shaft.
   In this case, each of the plurality of power reception antenna circuits can evenly receive electric power transmitted from the power transmission antenna when the rotary shaft rotates. As a result, the plurality of power reception antenna circuits can stably receive the transmitted electric power. In addition, since the plurality of power reception antenna circuits are disposed at equal intervals along the circumferential direction, an imbalance in the overall mass of the rotating tool can be suppressed.
(5) In the cutting machining system of the above (2) or (3), in a case where the one power reception antenna circuit includes a loop element, a central axis of the rotary shaft may pass through a center of the loop element.
   In this case, even when the rotary shaft rotates, changes in the relative positions of antenna elements with respect to the power transmission antenna are suppressed, and electric power transmitted from the power transmission antenna can be received stably. In addition, since the central axis of the rotary shaft passes through the center of the loop element, an imbalance in the overall mass of the rotating tool can be suppressed.
(6) In the cutting machining system of any one of the above (2) to (5), a circuit board on which the sensor is mounted and to which the one or plurality of power reception antenna circuits are each connected via a line for supplying electric power to the sensor, may be further provided.
   In this case, the circuit board can be provided at a location other than the inner surface of the end wall portion, for example, on the outer peripheral surface of the rotary shaft, which makes it possible to secure a large space for placing each power reception antenna circuit on the inner surface.
(7) In the cutting machining system of the above (6), one or a plurality of circuit chips mounted on the circuit board may be further provided.
   In this case, the one or plurality of circuit chips and the sensor can be mounted on the circuit board.
(8) In the cutting machining system of the above (7), the circuit board may include a first board portion on which the sensor is mounted and which is provided on an outer peripheral surface of the rotary shaft, and one or a plurality of second board portions on which the one or plurality of circuit chips are mounted and which are each connected to the first board portion via a bendable strip-shaped portion, and the one or plurality of second board portions may be disposed so as to face the end wall portion.
   In this case, since mounting surfaces of the second board portions on which the one or plurality of circuit chips are mounted are oriented along the direction of the centrifugal force generated by the rotation of the rotary shaft, it is possible to suppress the action of the centrifugal force in a direction in which the one or plurality of circuit chips are separated from each second board portion.
(9) In the cutting machining system of the above (8), the one or plurality of circuit chips may include a circuit chip that includes a communication antenna and a wireless communication circuit configured to transmit output of the sensor via the communication antenna.
   In this case, the communication antenna can be disposed near the end wall portion. Accordingly, when the output of the sensor is transmitted via the communication antenna, it is possible to prevent components other than the end wall portion from interfering with the transmission of the output of the sensor, and to appropriately transmit the output of the sensor.
(10) In the cutting machining system of any one of the above (7) to (9), the one or plurality of circuit chips may include a circuit chip that includes a power storage unit configured to store electric power received by the one or plurality of power reception antenna circuits.
   In this case, even when the one or plurality of power reception antenna circuits do not receive the transmitted electric power, the electric power stored in the power storage unit can be provided to the sensor.
(11) In the cutting machining system of any one of the above (7) to (10), the one or plurality of circuit chips may include a circuit chip that includes a combining circuit configured to combine electric power received by the plurality of power reception antenna circuits.
   The combining circuit can combine the electric power outputted from the plurality of power reception antenna circuits.
(12) An embodiment from another viewpoint is a rotating tool which is disposed in a machining space of a machine tool. This rotating tool includes: a rotary shaft configured to be rotationally driven by the machine tool; a sensor provided to the rotary shaft; a case provided to the rotary shaft and configured to house the sensor; and one or a plurality of power reception antenna circuits housed in the case and configured to receive electric power transmitted from a power supply device via a power transmission antenna provided in the machining space.

### [Details of embodiments]

Hereinafter, preferred embodiments will be described with reference to the drawings.

At least some parts of each embodiment described below may be combined as desired.

### [Overall configuration]

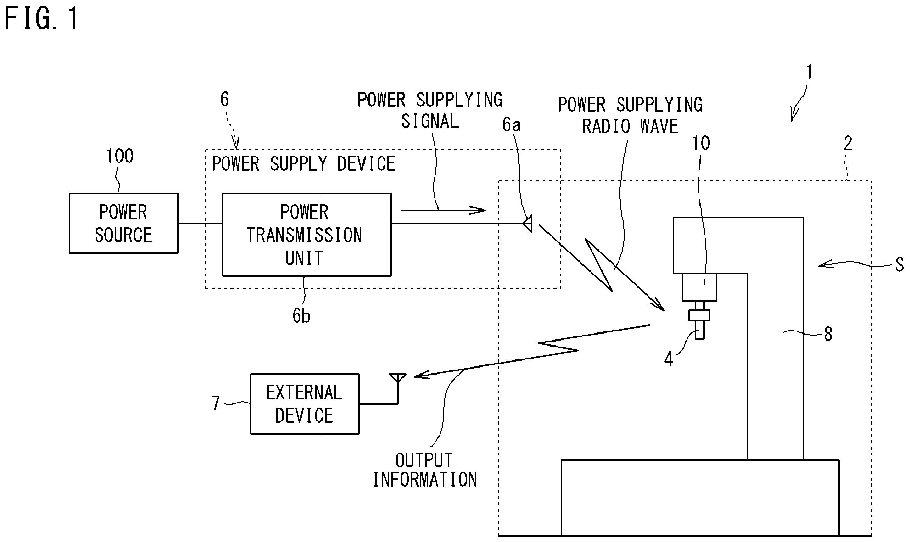

FIG. 1 shows an overall configuration of a cutting machining system according to an embodiment. In FIG. 1, a cutting machining system 1 includes a machine tool 2, a rotating tool 4, a power supply device 6, and an external device 7.

The machine tool 2 is an NC milling machine, for example. The machine tool 2 includes a column 8 and a spindle 10. The column 8 supports the spindle 10 above a table (not shown). The spindle 10 holds the rotating tool 4 by means of a chuck or the like. The spindle 10 is rotated about a rotational axis extending in the vertical direction by a motor.

The machine tool 2 rotationally drives the rotating tool 4 by rotating the spindle 10. A cutting tip is fixed to a lower end portion of the rotating tool 4. A workpiece fixed to the table is positioned at the machining location by the movement of the table and is subjected to cutting machining with the rotating tool 4.

Cutting machining is performed within a machining space S of the machine tool 2. The rotating tool 4, the column 8, the spindle 10, the table, and the like are disposed within the machining space S.

The machining space S is defined by a cover made of metal, resin, or the like. That is, the machining space S is a closed space enclosed by the cover. During cutting machining, cutting fluid (coolant) is supplied. In order to prevent scattering of the cutting fluid, the cutting machining is performed within the closed machining space S.

The rotating tool 4 is a tool for performing cutting machining on the workpiece. More specifically, the rotating tool 4 is a tool for performing rotating machining, which is a type of cutting machining. Rotating machining is machining in which the tool is rotated and pressed against a fixed workpiece.

The rotating tool 4 of the present embodiment includes a sensor. The sensor has a function of monitoring the state of the rotating tool 4. The rotating tool 4 further has a function of transmitting output information indicating the output of the sensor to the outside. The configuration of the rotating tool 4 will be described in detail below.

The power supply device 6 has a function of wirelessly supplying power to the rotating tool 4 within the machining space S. The power supply device 6 includes a power transmission antenna 6a and a power transmission unit 6b. The power transmission unit 6b generates a power supplying signal based on electric power supplied from a power source 100, and provides the signal to the power transmission antenna 6a. The power transmission antenna 6a is fixed at a position from which power can be wirelessly fed to the rotating tool 4 within the machining space S. The power transmission antenna 6a transmits the power supplying signal as a power supplying radio wave to the rotating tool 4.

The electric power transmitted from the power supply device 6 to the rotating tool 4 is used as operating power for the sensor of the rotating tool 4 and as electric power for transmitting output information.

The power supply device 6 of the present embodiment generates and transmits a signal in a frequency band including 5.7 GHz. That is, the power transmission antenna 6a radiates radio waves in the frequency band including 5.7 GHz.

The frequency band of the radio waves radiated by the power supply device 6 is not particularly limited. However, from the viewpoint of regulations or the like, the frequency band may include 2.4 GHz or 920 MHz.

The external device 7 is a device that is disposed outside (the machining space S of) the machine tool 2. The external device 7 has a function of performing wireless communication with the rotating tool 4. The external device 7 receives output information transmitted by the rotating tool 4 through the wireless communication.

The external device 7 is configured by a computer or the like. The external device 7 includes a processing unit, a storage unit, an input/output unit, and the like.

The external device 7 further includes a communication unit. The communication unit has a function of performing wireless communication with the rotating tool 4. The communication unit performs wireless communication with the rotating tool 4 via, for example, Bluetooth (registered trademark). Accordingly, the communication unit performs wireless communication using a frequency band including 2.4 GHz.

The external device 7 has a function of receiving, through the communication unit, output information transmitted from the rotating tool 4 and performing processing related to the output information. The external device 7 extracts, from the output information, information indicating monitoring results obtained by the sensor, and stores the information in the storage unit or outputs the monitoring results to the outside via the input/output unit.

### [Rotating tool according to first embodiment]

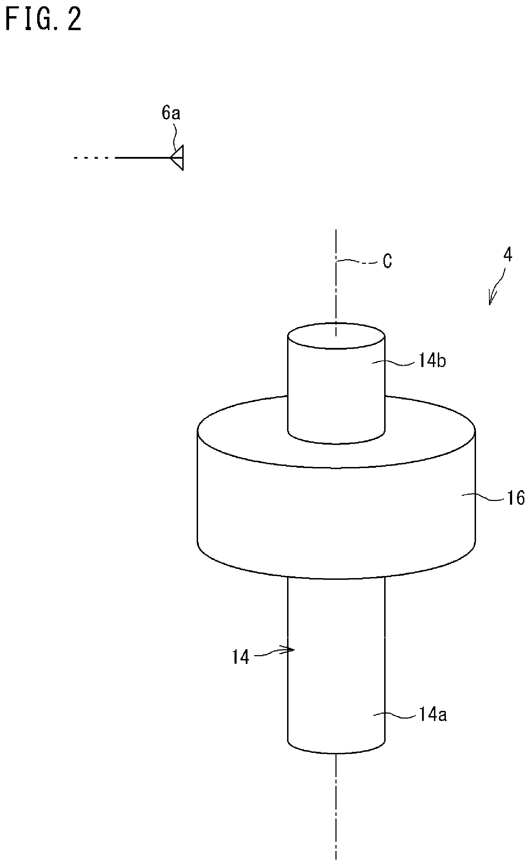

FIG. 2 is an external view of a rotating tool 4 according to a first embodiment.

As shown in FIG. 2, the rotating tool 4 includes a rotary shaft 14, and a case 16.

The rotary shaft 14 is a member formed of steel materials such as machine structural steel or tool steel.

The rotary shaft 14 has a tip-side end portion 14a and a spindle-side end portion 14b. A cutting tip is provided at a tip-side end portion 14a. The spindle-side end portion 14b is clamped by the spindle 10 of the machine tool 2. The central axis C of the rotary shaft 14 coincides with the rotational axis of the spindle 10. Accordingly, the rotary shaft 14 is rotationally driven about the central axis C.

The case 16 is an annular member. The case 16 covers a part of an outer peripheral side of the rotary shaft 14. Inside the case 16, a sensor, a circuit for communication with the external device 7, a rectenna for receiving electric power transmitted from the power supply device 6, and the like are housed.

The case 16 is fixed to the rotary shaft 14. Accordingly, when the rotary shaft 14 is rotationally driven, the case 16 rotates integrally with the rotary shaft 14.

The spindle 10 and the column 8 are positioned above the rotary shaft 14. Accordingly, as shown in FIG. 2, the power transmission antenna 6a of the power supply device 6 is disposed obliquely above the rotary shaft 14 so as to avoid the spindle 10 and the column 8. That is, the power transmission antenna 6a is located at a position spaced from the spindle-side end portion 14b of the rotary shaft 14 in the axial direction and the radial direction.

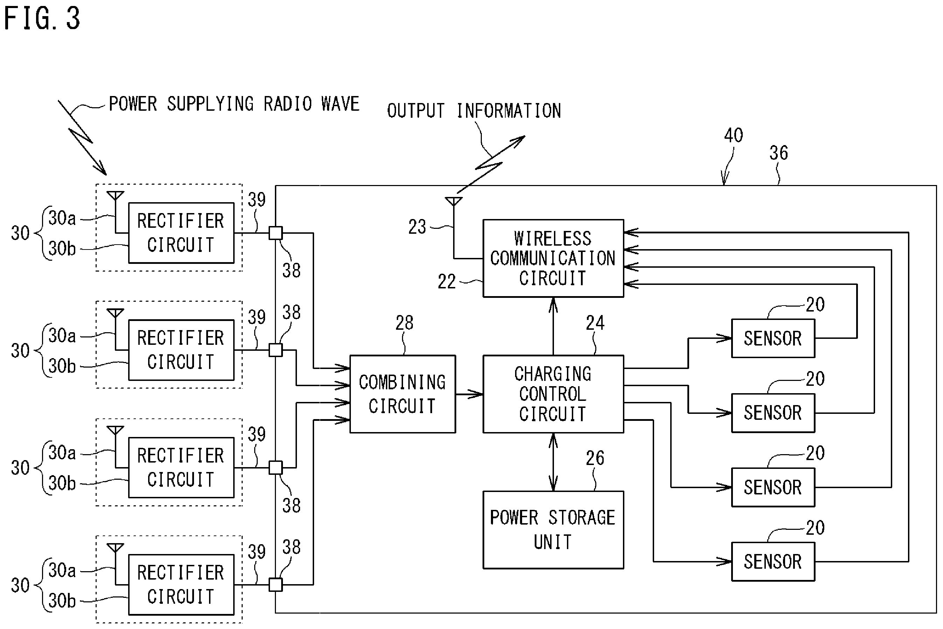

FIG. 3 is a block diagram showing an example of the configuration of the rotating tool 4.

As shown in FIG. 3, the rotating tool 4 further includes a plurality of sensors 20 (four sensors 20 in the illustrated example), a wireless communication circuit 22, a charging control circuit 24, a power storage unit 26, a combining circuit 28, and a plurality of rectennas 30 (four rectennas 30 in the illustrated example), in addition to the rotary shaft 14 and the case 16 described above.

The four sensors 20, the wireless communication circuit 22, the charging control circuit 24, the power storage unit 26, the combining circuit 28, and the four rectennas 30 are housed inside the case 16.

The four rectennas 30 receive electric power transmitted from the power transmission antenna 6a of the power supply device 6.

Each of the four rectennas 30 includes a power reception antenna 30a and a rectifier circuit 30b. The power reception antenna 30a receives a power supplying radio wave from the power supply device 6. The power reception antenna 30a provides an electrical signal generated from the received radio wave to the rectifier circuit 30b. The rectifier circuit 30b rectifies the electrical signal provided by the power reception antenna 30a, converts the rectified signal into direct-current power, and outputs the direct-current power.

That is, the rectenna 30 constitutes a power reception antenna circuit including the power reception antenna 30a that receives the electric power transmitted from the power transmission antenna 6a.

The direct-current power outputted from the rectifier circuit 30b is provided to the combining circuit 28.

The combining circuit 28 combines the direct-current power outputted from the four rectennas 30. The combined direct-current power is provided to the charging control circuit 24.

The charging control circuit 24 has functions of converting the direct-current power provided by the combining circuit 28 (rectenna 30) into a predetermined voltage, controlling charging and discharging of the power storage unit 26, and providing the direct-current power from the combining circuit 28 and the direct-current power from the power storage unit 26 to the four sensors 20 and the wireless communication circuit 22.

Upon receiving direct-current power from the combining circuit 28, the charging control circuit 24 can also provide the direct-current power only to the power storage unit 26.

Further, when direct-current power is not provided by the combining circuit 28, the charging control circuit 24 can provide the direct-current power stored in the power storage unit 26 to the four sensors 20 and the wireless communication circuit 22.

The power storage unit 26 includes, for example, a battery or a capacitor. The power storage unit 26 stores direct-current power provided via the charging control circuit 24. The power storage unit 26 also discharges the stored power according to control by the charging control circuit 24.

The four sensors 20 are sensors for monitoring the state of the rotary shaft 14. More specifically, the four sensors 20 include a strain sensor, a temperature sensor, an acceleration sensor, and the like. The four sensors 20 have functions of monitoring strain, temperature, and acceleration (vibration), which are states of the rotary shaft 14. Upon receiving direct-current power from the charging control circuit 24, the four sensors 20 provide output indicating the result obtained through the monitoring of the state of the rotary shaft 14, to the wireless communication circuit 22.

The wireless communication circuit 22 is provided with a communication antenna 23. The wireless communication circuit 22 has a function of performing wireless communication with the external device 7 via the communication antenna 23.

The wireless communication circuit 22 wirelessly transmits, as output information, the output provided by the four sensors 20. Upon receiving direct-current power from the charging control circuit 24, the wireless communication circuit 22 establishes a communication connection with the external device 7 and starts wireless transmission of the output information.

When performing cutting machining using the above-described cutting machining system 1, an operator of the system 1 first mounts the rotating tool 4 on the spindle 10. Further, the operator mounts a workpiece on the table of the machine tool 2. Then, the operator closes the cover of the machine tool 2, thereby closing the machining space S.

Next, the operator starts wireless power supplying to the rotating tool 4 by means of the power supply device 6.

Accordingly, the rotating tool 4 receives electric power transmitted from the power supply device 6. Since the electric power is provided by the power supply device 6, the four sensors 20 of the rotating tool 4 start monitoring the state of the rotary shaft 14 and outputting the monitoring result. Further, the wireless communication circuit 22 establishes a communication connection with the external device 7 and starts wireless transmission of the output information.

Thereafter, the operator operates the machine tool 2 to start the cutting machining.

At this time, the four sensors 20 of the rotating tool 4 provide output indicating the result obtained through monitoring of the state of the rotating tool 4, to the wireless communication circuit 22. The wireless communication circuit 22 wirelessly transmits, as output information, the output provided by the four sensors 20.

The output information transmitted by the wireless communication circuit 22 is received by the external device 7.

Upon receiving the output information, the external device 7 acquires, from the output information, information indicating the state of the rotary shaft 14. The external device 7 outputs the acquired information indicating the state of the rotary shaft 14. Thus, the external device 7 can output the machining state (the state of the rotating tool 4) during cutting machining to the operator. The operator can monitor the machining state during cutting machining through the output from the external device 7.

In FIG. 3, the four sensors 20, the wireless communication circuit 22, the charging control circuit 24, the power storage unit 26, and the combining circuit 28 are mounted on a circuit board 36.

The circuit board 36, together with the four sensors 20 and circuits 22, 24, 26, 28 mounted on the circuit board 36, constitute a circuit module 40. The four rectennas 30 are connected to the circuit module 40.

The circuit module 40 further includes four connectors 38. Four lines 39 extending from the four rectennas 30 are connected to the four connectors 38. That is, the four rectennas 30 are connected to the circuit module 40 (circuit board 36) via the four lines 39.

The electric power output from the four rectennas 30 is provided to the combining circuit 28 of the circuit module 40 via the four lines 39 and the four connectors 38.

The circuit module 40 (circuit board 36) is provided on an outer peripheral surface of the rotary shaft 14.

The four rectennas 30 are provided on an inner surface of the case 16.

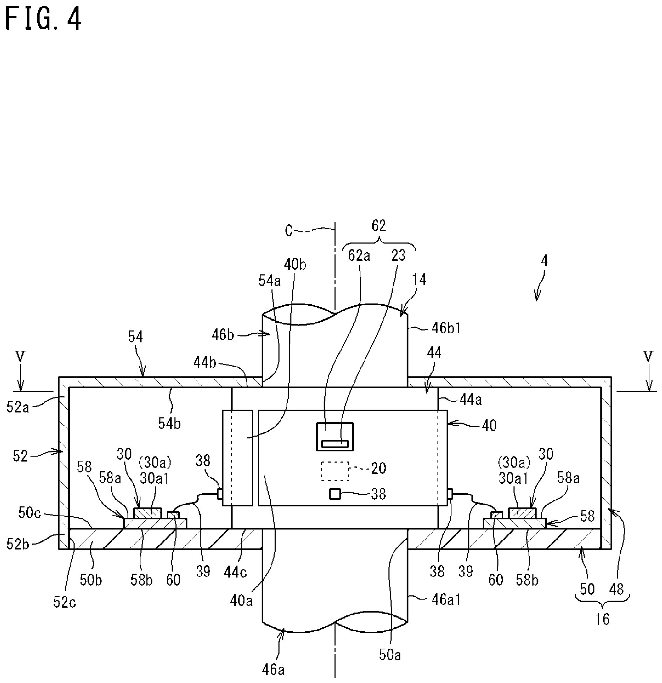

FIG. 4 is a cross-sectional view of the rotating tool 4. FIG. 4 shows a cross section taken along an axial plane including the central axis C. In FIG. 4, cross sections of the case 16 and the rectenna 30 are shown, while external views of the rotary shaft 14 and the circuit module 40 are shown.

In FIG. 4, the case 16 is shown in an exaggerated manner for ease of understanding of the interior of the case 16. The same applies to the following description.

In FIG. 4, the rotary shaft 14 includes a large-diameter portion 44, a first small-diameter portion 46a, and a second small-diameter portion 46b. The small-diameter portions 46a, 46b extend respectively from both end surfaces of the large-diameter portion 44 in the axial direction. A distal end of the first small-diameter portion 46a is the tip-side end portion 14a. A distal end of the second small-diameter portion 46b is the spindle-side end portion 14b. Accordingly, a cutting tip is provided at the distal end of the first small-diameter portion 46a. In addition, the distal end of the second small-diameter portion 46b is clamped by the spindle 10 of the machine tool 2.

The case 16 includes a case body 48 and a first end wall portion 50.

The case body 48 is an annular member formed using a steel plate or the like. The case body 48 includes a side wall portion 52 and a second end wall portion 54.

The side wall portion 52 has a cylindrical shape and surrounds an outer peripheral side of the large-diameter portion 44. The side wall portion 52 is disposed concentrically with the rotary shaft 14. That is, the center in the axial direction of the side wall portion 52 coincides with the central axis C.

The second end wall portion 54 is a flat annular member. An outer peripheral end of the second end wall portion 54 is connected to an end portion 52a. The end portion 52a is an end portion of the side wall portion 52, on the second small-diameter portion 46b side. The second small-diameter portion 46b is inserted in a central hole 54a of the second end wall portion 54. In addition, an inner surface 54b of the second end wall portion 54 is in contact with an annular end surface 44b. The annular end surface 44b is an end surface of the large-diameter portion 44, on the second small-diameter portion 46b side, and is a surface that connects an outer peripheral surface 44a of the large-diameter portion 44 and an outer peripheral surface 46b1 of the second small-diameter portion 46b. The case body 48 is positioned relative to the rotary shaft 14 by the second small-diameter portion 46b and the annular end surface 44b.

The first end wall portion 50 is a flat annular member formed using resin. The first small-diameter portion 46a is inserted in a central hole 50a of the first end wall portion 50. In addition, an outer peripheral end 50b of the first end wall portion 50 is in contact with the side wall portion 52. Accordingly, the first end wall portion 50 closes an opening 52c at an end portion 52b of the side wall portion 52. The end portion 52b is an end portion of the side wall portion 52, on the first small-diameter portion 46a side.

That is, the first end wall portion 50 serves as a lid that closes the opening of the case body 48.

In addition, an inner surface 50c of the first end wall portion 50 is in contact with an annular end surface 44c. The annular end surface 44c is an end surface of the large-diameter portion 44, on the first small-diameter portion 46a side, and is a surface that connects the outer peripheral surface 44a of the large-diameter portion 44 and an outer peripheral surface 46a1 of the first small-diameter portion 46a. The first end wall portion 50 is positioned relative to the rotary shaft 14 by the first small-diameter portion 46a and the annular end surface 44c.

The case body 48 is integrally fixed to the rotary shaft 14 by screws or the like (not shown). The first end wall portion 50 is also fixed to the rotary shaft 14 and the case body 48 by screws or the like (not shown). Thus, the case 16 is integrally fixed to the rotary shaft 14.

The space between the central hole 54a of the second end wall portion 54 and the second small-diameter portion 46b is sealed. The space between the central hole 50a of the first end wall portion 50 and the first small-diameter portion 46a is also sealed. Further, the space between the outer peripheral end 50b of the first end wall portion 50 and the side wall portion 52 is also sealed. Thus, cutting fluid is prevented from entering the interior of the case 16.

The circuit module 40 is provided on the outer peripheral surface 44a of the large-diameter portion 44. The circuit board 36 included in the circuit module 40 is a rectangular strip-shaped flexible printed circuit (FPC). Accordingly, the circuit module 40 is deformable. The circuit module 40 is wound so as to be deformed along the outer peripheral surface 44a.

The four rectennas 30 are provided on the inner surface 50c of the first end wall portion 50.

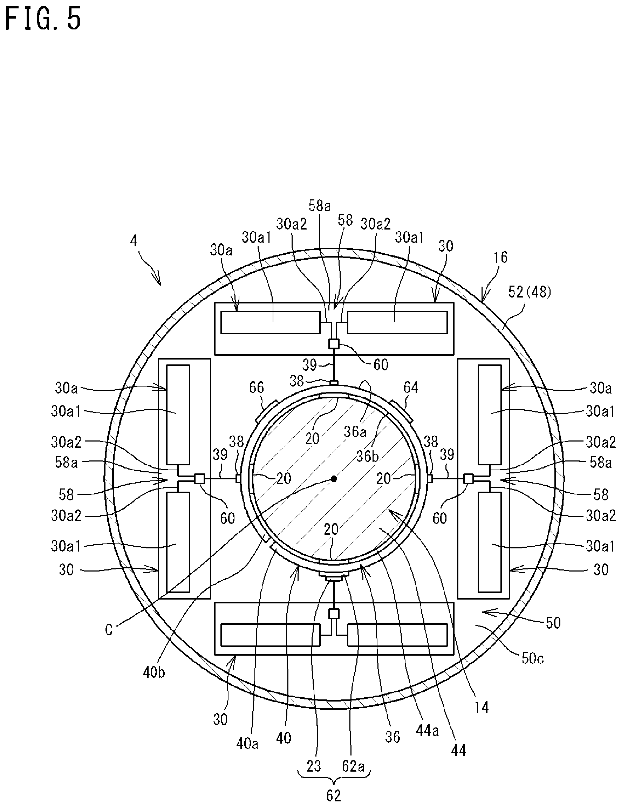

FIG. 5 is a cross-sectional view taken along arrows V-V in FIG. 4. FIG. 5 shows a radial cross section of the rotating tool 4, taken along a plane perpendicular to the central axis C.

As shown in FIG. 4 and FIG. 5, the four rectennas 30 respectively include antenna substrates 58. Each of the antenna substrates 58 has a rectangular plate shape.

The power reception antenna 30a included in each rectenna 30 is mounted on a first surface 58a of the antenna substrate 58. A second surface 58b of the antenna substrate 58 is in contact with the inner surface 50c. The first surface 58a is a surface of the antenna substrate 58, on the second small-diameter portion 46b side. The second surface 58b is a surface of the antenna substrate 58, on the first small-diameter portion 46a side.

The four antenna substrates 58 are fixed to the inner surface 50c. As shown in FIG. 5, the four antenna substrates 58 are disposed at equal intervals (90°) in the circumferential direction so as to surround the rotary shaft 14. In addition, the longitudinal direction of each of the antenna substrates 58 is perpendicular to a radial straight line passing through the central axis C.

As described above, the plurality of rectennas 30 (the plurality of antenna substrates 58) are disposed at equal intervals along the circumferential direction centered on the central axis C.

As shown in FIG. 5, a circuit chip 60 is mounted on the first surface 58a of each antenna substrate 58, in addition to the power reception antenna 30a.

The power reception antenna 30a includes a pair of antenna elements 30a1 and a pair of lines 30a2. The pair of antenna elements 30a1 and the pair of lines 30a2 are metal foils such as copper foils patterned on the first surface 58a.

The pair of antenna elements 30a1 each have a linear shape along the longitudinal direction of the antenna substrate 58. The pair of antenna elements 30a1 are disposed in a row along the longitudinal direction of the antenna substrate 58. The power reception antenna 30a including the pair of antenna elements 30a1 constitutes a dipole antenna.

The pair of lines 30a2 connects end portions of the pair of antenna elements 30a1 to the circuit chip 60.

The circuit chip 60 is a circuit chip that includes the rectifier circuit 30b. In addition, the line 39 is connected to the circuit chip 60. As described above, the line 39 is a line that is connected to the connector 38 of the circuit module 40.

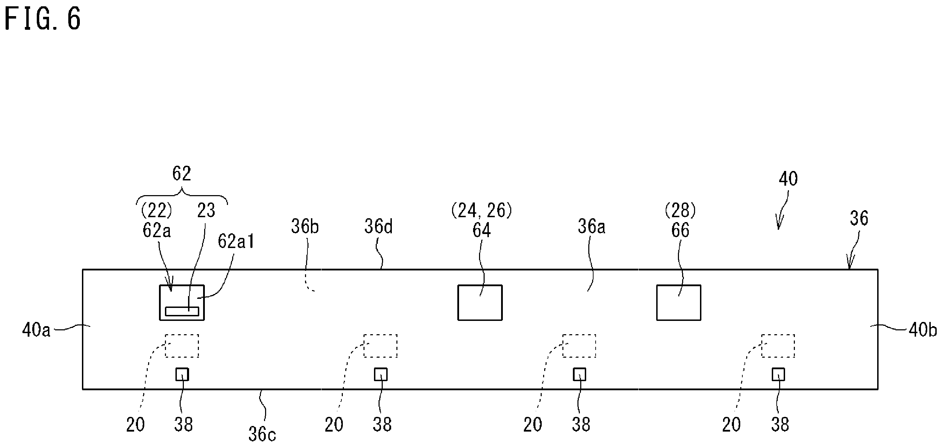

FIG. 6 shows the circuit module 40 which is developed flat.

The circuit module 40 (circuit board 36) has a rectangular strip shape. The circuit module 40 includes a first end portion 40a and a second end portion 40b. The length in the longitudinal direction of the circuit module 40 is slightly shorter than the that of the large-diameter portion 44. Accordingly, when the circuit module 40 is wound around the large-diameter portion 44, a slight gap is formed between the first end portion 40a and the second end portion 40b (see FIG. 4 and FIG. 5).

As described above, the four sensors 20 and the four connectors 38 are mounted on the circuit board 36 of the circuit module 40.

In addition, a first circuit chip 62, a second circuit chip 64, and a third circuit chip 66 are mounted on the circuit board 36.

The four connectors 38, and the circuit chips 62, 64, 66 are mounted on an outer surface 36a of the circuit board 36. The four sensors 20 are mounted on an inner surface 36b of the circuit board 36. The outer surface 36a is a surface that faces outward when the circuit module 40 is wound around the large-diameter portion 44. The inner surface 36b is a surface opposite the outer surface 36a, and is the surface that faces inward when the circuit module 40 is wound around the large-diameter portion 44.

The four sensors 20 are provided so as to be arranged along the longitudinal direction of the circuit module 40. The four sensors 20 are provided so as to be disposed at equal intervals along the circumferential direction when the circuit module 40 is wound around the large-diameter portion 44.

The four connectors 38 are provided along the longitudinal direction of the circuit module 40 so as to correspond to the positions of the four sensors 20. Accordingly, the four connectors 38 are also provided so as to be disposed at equal intervals along the circumferential direction when the circuit module 40 is wound around the large-diameter portion 44.

The four connectors 38 are located closer to the first long side 36c than the four sensors 20. The first long side 36c is a long side of the circuit board 36 and is located on the first small-diameter portion 46a side.

The circuit chips 62, 64, 66 are provided so as to be arranged along the longitudinal direction of the circuit module 40.

The circuit chips 62, 64, 66 are located closer to the second long side 36d than the four sensors 20. The second long side 36d is a long side of the circuit board 36 and is located on the second small-diameter portion 46b side.

The first circuit chip 62 includes a chip body 62a and the communication antenna 23. The communication antenna 23 is provided on an outer surface 62a1 of the chip body 62a. The chip body 62a is a circuit chip that includes the wireless communication circuit 22.

The position of the first circuit chip 62 in the longitudinal direction of the circuit module 40 corresponds to the position of one of the four sensors 20 that is closest to the first end portion 40a.

The second circuit chip 64 is a circuit chip that includes the charging control circuit 24 and the power storage unit 26.

The position of the second circuit chip 64 in the longitudinal direction of the circuit module 40 is located at an intermediate position between a pair of the sensors 20 that are centrally located among the four sensors 20.

The third circuit chip 66 is a circuit chip that includes the combining circuit 28.

The position of the third circuit chip 66 in the longitudinal direction of the circuit module 40 is located at an intermediate position between one of the four sensors 20 that is closest to the second end portion 40b and a sensor 20 adjacent to the one sensor 20.

When the circuit module 40 is wound around the large-diameter portion 44, the four sensors 20 are in contact with the outer peripheral surface 44a of the large-diameter portion 44. Thus, the four sensors 20 can monitor the state of the rotary shaft 14.

When the four sensors 20 are in contact with the outer peripheral surface 44a, a gap may be formed between the outer peripheral surface 44a and the inner surface 36b of the circuit board 36. This gap is filled with resin or the like. Thus, the circuit module 40 is fixed in close contact with the outer peripheral surface 44a.

The sensors 20 may be mounted on the circuit board 36 by being connected to the circuit board 36 via lead wires or the like.

According to the above-described configuration, since the power supply device 6 includes the power transmission antenna 6a within the machining space S and the rotating tool 4 includes the plurality of rectennas 30 (power reception antenna circuits), power can be wirelessly fed to the rotating tool 4 within the machining space S. Accordingly, power can be fed to the rotating tool 4 during machining, and even when the machining time becomes long, electric power can be continuously provided to the sensor 20, thereby enabling monitoring by the sensor 20. As a result, the state of the rotating tool 4 during machining can be appropriately monitored.

In the present embodiment, since the plurality of rectennas 30 are provided on the inner surface 50c of the first end wall portion 50 of the case 16 and the power transmission antenna 6a is located at a position axially spaced from the spindle-side end portion 14b of the rotary shaft 14, it is possible to suppress an increase in a change in the distance between the power transmission antenna 6a and each rectenna 30 when the rotary shaft 14 rotates, and to stably receive electric power transmitted from the power transmission antenna 6a.

In the present embodiment, since the first end wall portion 50 is formed of resin, the electric power transmitted from the power transmission antenna 6a can easily pass through the first end wall portion 50, and it is possible to suppress interference with the reception of the transmitted electric power, which is caused by the first end wall portion 50.

In the present embodiment, since the four rectennas 30 are disposed at equal intervals along the circumferential direction centered on the central axis C of the rotary shaft 14, each of the plurality of rectennas 30 can evenly receive electric power transmitted from the power transmission antenna 6a when the rotary shaft 14 rotates. As a result, the plurality of rectennas 30 can stably receive the transmitted electric power.

In addition, since the four rectennas 30 are disposed at equal intervals along the circumferential direction, an imbalance in the overall mass of the rotating tool 4 can be suppressed.

In the present embodiment, since the circuit board 36 on which the four sensors 20 are mounted and to which the four rectennas 30 are connected via the four lines 39 for supplying electric power to the four sensors 20 is provided, the circuit board 36 (circuit module 40) can be provided at a location other than the inner surface 50c of the first end wall portion 50, for example, on the outer peripheral surface of the rotary shaft.

This makes it possible to secure a large space for placing each rectenna 30 on the inner surface 50c.

### [Modification of first embodiment]

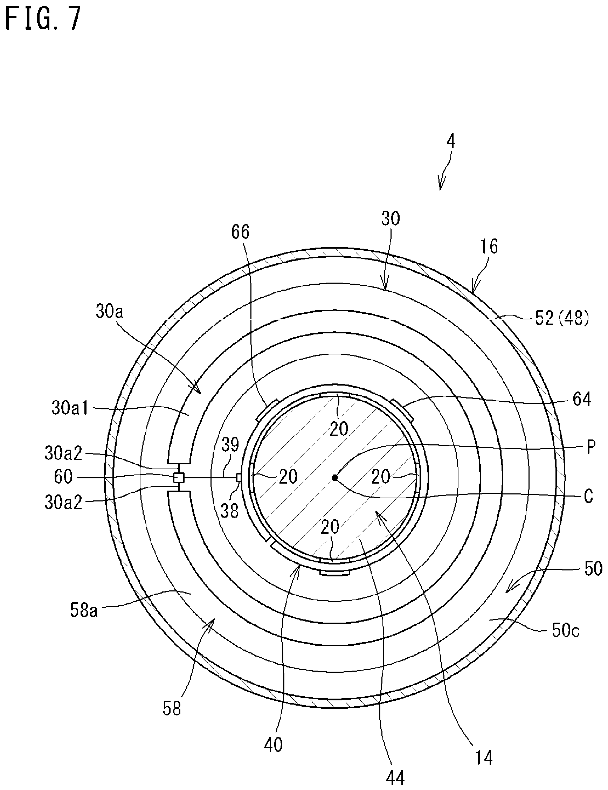

FIG. 7 is a radial cross-sectional view of a rotating tool 4 according to a modification of the first embodiment.

In this modification, the rotating tool 4 includes one rectenna 30, and the antenna element 30a1 of this rectenna 30 is a loop element. This differs from the above embodiment.

The antenna substrate 58 of the rectenna 30 of the present embodiment has a flat annular plate shape. The antenna substrate 58 is fixed to the inner surface 50c such that the center of the antenna substrate 58 coincides with the central axis C.

The antenna element 30a1 of the power reception antenna 30a mounted on the first surface 58a of the antenna substrate 58 is formed as a C-shaped loop. Accordingly, the power reception antenna 30a of the present embodiment constitutes a loop antenna.

The pair of lines 30a2 connect both ends of the antenna element 30a1 to the circuit chip 60. The circuit chip 60 is connected to the connector 38 of the circuit module 40 via the line 39.

The antenna element 30a1 as a loop element is provided on the first surface 58a such that the central axis C passes through the center P of the antenna element 30a1.

Thus, even when the rotary shaft 14 rotates, changes in the relative position of the antenna element 30a1 with respect to the power transmission antenna 6a are suppressed, and electric power transmitted from the power transmission antenna 6a can be received stably.

In addition, since the central axis C passes through the center P of the antenna element 30a1, an imbalance in the overall mass of the rotating tool 4 can be suppressed.

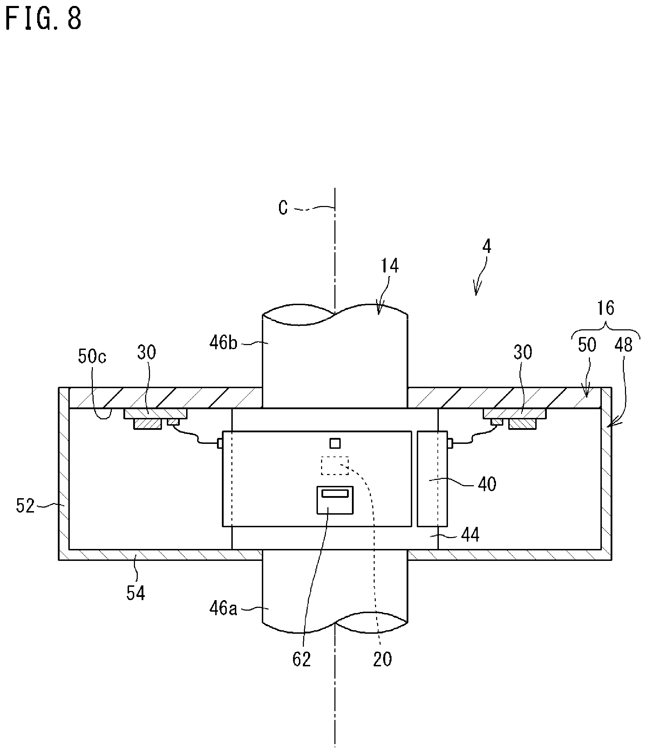

FIG. 8 is a cross-sectional view taken along an axial plane of a rotating tool 4 according to another modification of the first embodiment.

In this modification, the first end wall portion 50 of the case 16 is externally fitted and fixed to the second small-diameter portion 46b on the spindle 10 side, and the first end wall portion 50 is provided on the spindle 10 side with respect to the circuit module 40 and the large-diameter portion 44. This differs from the above embodiment.

In this modification as well, since the plurality of rectennas 30 are provided on the inner surface of the end wall portion of the case 16, and the power transmission antenna 6a is located at a position axially spaced from the spindle-side end portion 14b of the rotary shaft 14, it is possible to suppress an increase in a change in the distance between the power transmission antenna 6a and each rectenna 30 when the rotary shaft 14 rotates, and to stably receive electric power transmitted from the power transmission antenna 6a.

In the present embodiment, since the first end wall portion 50 is provided on the spindle 10 side with respect to the circuit module 40 and the large-diameter portion 44, and the power transmission antenna 6a is located at a position axially spaced from the spindle-side end portion 14b of the rotary shaft 14, obstacles such as the case body 48 located between the power transmission antenna 6a and the plurality of rectennas 30 can be reduced. As a result, the electric power transmitted from the power transmission antenna 6a can be received more stably.

### [Rotating tool according to second embodiment]

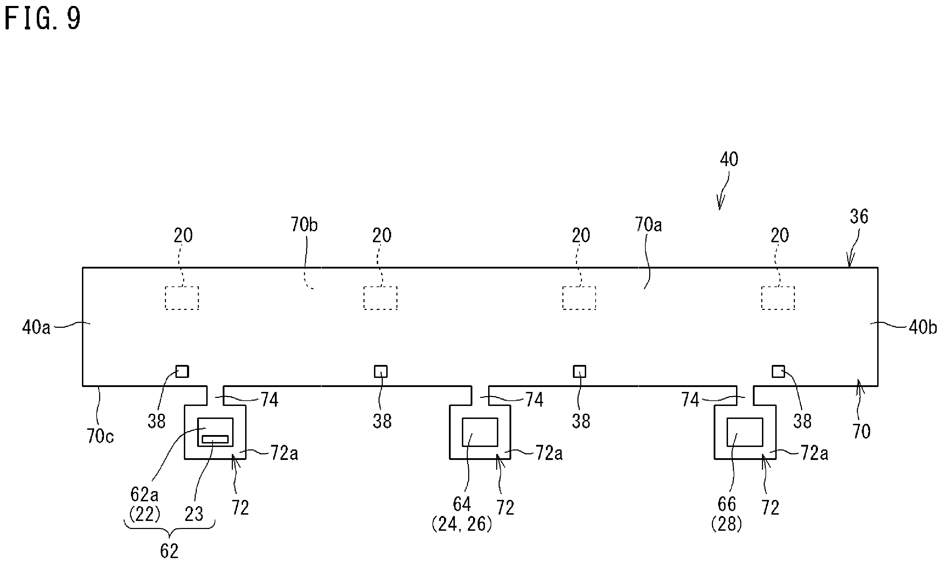

FIG. 9 shows a circuit module 40 included in a rotating tool 4 according to a second embodiment.

In the present embodiment, a circuit board 36 of the circuit module 40 includes a first board portion 70 and a plurality of second board portions 72 (three second board portions 72 in the illustrated example). This differs from the first embodiment.

The first board portion 70 has a rectangular strip shape. The first board portion 70 is wound so as to be deformed along the outer peripheral surface 44a of the large-diameter portion 44 of the rotary shaft 14. The four connectors 38 are mounted on an outer surface 70a of the first board portion 70. The four sensors 20 are mounted on an inner surface 70b of the first board portion 70. The outer surface 70a is a surface that faces outward when the first board portion 70 is wound around the large-diameter portion 44. The inner surface 70b is a surface that faces inward when the first board portion 70 is wound around the large-diameter portion 44.

The four connectors 38 and the four sensors 20 are provided so as to be arranged along the longitudinal direction of the circuit module 40, as in the first embodiment.

As shown in FIG. 9, the three second board portions 72 are connected to a long side 70c. The long side 70c is a long side of the first board portion 70 and located on the first small-diameter portion 46a.

Each of the three second board portions 72 has a rectangular shape. The second board portion 72 is connected to the long side 70c via a bendable strip-shaped portion 74.

In the longitudinal direction of the circuit module 40, the position of each of the three second board portions 72 is located at an intermediate position between adjacent ones of the four connectors 38.

The first circuit chip 62 is mounted on one of the three second board portions 72 that is located on the first end portion 40a side.

The third circuit chip 66 is mounted on one of the three second board portions 72 that is located on the second end portion 40b side.

The second circuit chip 64 is mounted on one of the three second board portions 72 that is centrally located.

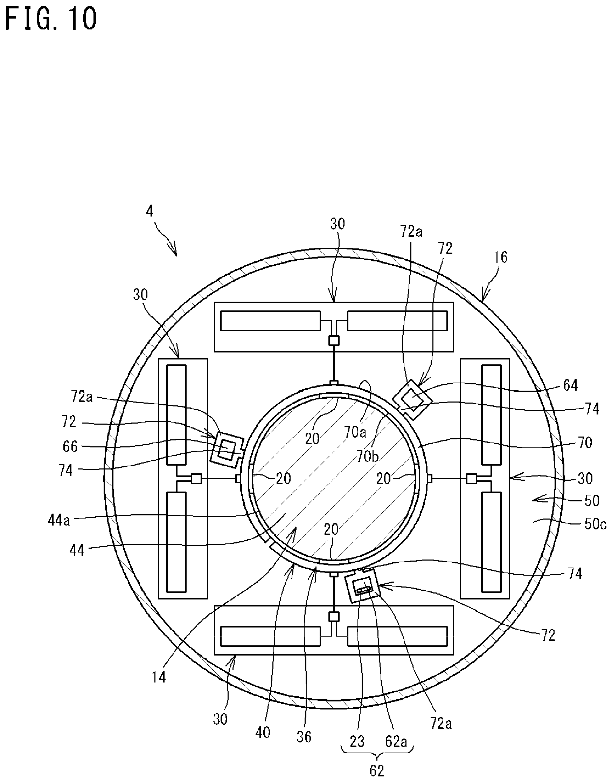

FIG. 10 is a radial cross-sectional view of the rotating tool 4 according to the second embodiment.

As shown in FIG. 10, the first board portion 70 of the circuit board 36 is wound around the outer peripheral surface 44a of the large-diameter portion 44. The first board portion 70 is fixed to the outer peripheral surface 44a in the same manner as in the first embodiment.

Mounting surfaces 72a of the three second board portions 72 face the second small-diameter portion 46b side. Each of the mounting surfaces 72a is a surface of the second board portions 72 on which a circuit chip is mounted.

In addition, the surface opposite the mounting surface 72a is in contact with the inner surface 50c and fixed to the inner surface 50c.

Thus, the three second board portions 72 are disposed so as to face the inner surface 50c of the first end wall portion 50.

The three second board portions 72 are also provided at equal intervals along the circumferential direction in the same manner as the four rectennas 30.

Thus, the three second board portions 72 can suppress disturbance in the dynamic balance of the rotating tool 4 as a whole, and an imbalance in the overall mass of the rotating tool 4 can be suppressed.

In this case, since the mounting surfaces 72a are oriented along the direction of the centrifugal force generated by the rotation of the rotary shaft 14, it is possible to suppress the action of the centrifugal force in a direction in which the circuit chips 62, 64, 66 are separated from the second board portions 72.

In the present embodiment, since the first circuit chip 62 including the wireless communication circuit 22 (the chip body 62a) that transmits the output of each sensor 20 via the communication antenna 23 is mounted on the second board portion 72, the communication antenna 23 can be disposed near the first end wall portion 50. Accordingly, when the output of the sensor 20 is transmitted via the communication antenna 23, it is possible to prevent components other than the first end wall portion 50 from interfering with the transmission of the output of the sensor 20, and to appropriately transmit the output of the sensor 20.

### [Others]

It should be noted that the embodiments disclosed herein are merely illustrative and not restrictive in all aspects.

In the above embodiments, an example in which the rectenna 30 is provided on the inner surface 50c of the first end wall portion 50 is described. However, the rectenna 30 only needs to be housed in the case 16, and may be provided on an inner surface of the side wall portion 52 or an inner surface of the second end wall portion 54.

Further, in the above embodiments, an example in which the case 16 has an annular shape is described. However, the outer shape of the case 16 may be a regular polygon such as a hexagon or an octagon, for example.

Furthermore, in the above embodiments, an example in which the power reception antenna 30a constitutes a dipole antenna and an example in which the power reception antenna 30a constitutes a loop antenna are described. However, the power reception antenna 30a may constitute a patch antenna including one or a plurality of patch elements.

The scope of the present invention is defined by the scope of the claims rather than the meaning described above, and is intended to include meaning equivalent to the scope of the claims and all modifications within the scope.

### REFERENCE SIGNS LIST

- 1: cutting machining system
- 2: machine tool
- 4: rotating tool
- 6: power supply device
- 6a: power transmission antenna
- 6b: power transmission unit
- 7: external device
- 8: column
- 10: spindle
- 14: rotary shaft
- 14a: tip-side end portion
- 14b: spindle-side end portion
- 16: case
- 20: sensor
- 22: wireless communication circuit
- 23: communication antenna
- 24: charging control circuit
- 26: power storage unit
- 28: combining circuit
- 30: rectenna
- 30a: power reception antenna
- 30a1: antenna element
- 30a2: line
- 30b: rectifier circuit
- 36: circuit board
- 36a: outer surface
- 36b: inner surface
- 36c: first long side
- 36d: second long side
- 38: connector
- 39: line
- 40: circuit module
- 40a: first end portion
- 40b: second end portion
- 44: large-diameter portion
- 44a: outer peripheral surface
- 44b: annular end surface
- 44c: annular end surface
- 46a: small-diameter portion
- 46a1: outer peripheral surface
- 46b: small-diameter portion
- 46b1: outer peripheral surface
- 48: case body
- 50: first end wall portion
- 50a: central hole
- 50b: outer peripheral end
- 50c: inner surface
- 52: side wall portion
- 52a: end portion
- 52b: end portion
- 52c: opening
- 54: second end wall portion
- 54a: central hole
- 54b: inner surface
- 58: antenna substrate
- 58a: first surface
- 58b: second surface
- 60: circuit chip
- 62: first circuit chip
- 62a: chip body
- 62a1: outer surface
- 64: second circuit chip
- 66: third circuit chip
- 70: first board portion
- 70a: outer surface
- 70b: inner surface
- 70c: long side
- 72: second board portion
- 72a: mounting surface
- 74: strip-shaped portion
- 100: power source
- C: central axis
- P: center
- S: machining space

## Claims

1. A cutting machining system comprising:
a power supply device that includes a power transmission antenna provided in a machining space of a machine tool; and
a rotating tool disposed in the machining space, wherein
the rotating tool includes
a rotary shaft configured to be rotationally driven by the machine tool,
a sensor provided to the rotary shaft,
a case provided to the rotary shaft and configured to house the sensor, and
one or a plurality of power reception antenna circuits housed in the case and configured to receive electric power transmitted from the power transmission antenna.

2. The cutting machining system according to claim 1, wherein
the case includes
a side wall portion having a cylindrical shape, the side wall portion being disposed concentrically with the rotary shaft and surrounding an outer peripheral side of the rotary shaft, and
an end wall portion having an annular shape and closing an end portion opening of the side wall portion, and
the one or plurality of power reception antenna circuits are provided on an inner surface of the end wall portion.

3. The cutting machining system according to claim 2, wherein the end wall portion is formed of resin.

4. The cutting machining system according to claim 2 or 3, wherein the plurality of power reception antenna circuits are provided at equal intervals along a circumferential direction centered on a central axis of the rotary shaft.

5. The cutting machining system according to claim 2 or 3, wherein
the one power reception antenna circuit includes a loop element, and
a central axis of the rotary shaft passes through a center of the loop element.

6. The cutting machining system according to any one of claims 2 to 5, further comprising
a circuit board on which the sensor is mounted and to which the one or plurality of power reception antenna circuits are each connected via a line for supplying electric power to the sensor.

7. The cutting machining system according to claim 6, further comprising
one or a plurality of circuit chips mounted on the circuit board.

8. The cutting machining system according to claim 7, wherein
the circuit board includes
a first board portion on which the sensor is mounted and which is provided on an outer peripheral surface of the rotary shaft, and
one or a plurality of second board portions on which the one or plurality of circuit chips are mounted and which are each connected to the first board portion via a bendable strip-shaped portion, and
the one or plurality of second board portions are disposed so as to face the end wall portion.

9. The cutting machining system according to claim 8, wherein
the one or plurality of circuit chips include a circuit chip that includes a communication antenna and a wireless communication circuit configured to transmit output of the sensor via the communication antenna.

10. The cutting machining system according to any one of claims 7 to 9, wherein
the one or plurality of circuit chips include a circuit chip that includes a power storage unit configured to store electric power received by the one or plurality of power reception antenna circuits.

11. The cutting machining system according to any one of claims 7 to 10, wherein
the one or plurality of circuit chips include a circuit chip that includes a combining circuit configured to combine electric power received by the plurality of power reception antenna circuits.

12. A rotating tool which is disposed in a machining space of a machine tool, the rotating tool comprising:
a rotary shaft configured to be rotationally driven by the machine tool;
a sensor provided to the rotary shaft;
a case provided to the rotary shaft and configured to house the sensor; and
one or a plurality of power reception antenna circuits housed in the case and configured to receive electric power transmitted from a power supply device via a power transmission antenna provided in the machining space.
